# EUROPEAN PATENT SPECIFICATION

(11) **EP 3 699 119 B1**
(45) Date of publication and mention of the grant of the patent: **18.08.2021**
(21) Application number: 20154042.4
(22) Date of filing: 28.01.2020
(51) Int. Cl.: B65G 49/06, C03B 33/03

(54) **METHOD FOR PROCESSING AND STORING PLATES, IN PARTICULAR GLASS PLATES, AND APPARATUS FOR PROVIDING SUCH METHOD**
VERFAHREN ZUM BEARBEITEN UND LAGERN VON PLATTEN, INSBESONDERE GLASPLATTEN, UND VORRICHTUNG ZUR DURCHFÜHRUNG EINES SOLCHEN VERFAHRENS
PROCÉDÉ DE TRAITEMENT ET DE STOCKAGE DE PLAQUES, EN PARTICULIER DE PLAQUES DE VERRE ET APPAREIL POUR FOURNIR UN TEL PROCÉDÉ

(30) Priority: 19.02.2019 IT 201900002371
(43) Date of publication of application: 26.08.2020
(73) Proprietor: Macotec S.R.L., 23010 Rogolo, (SO) (IT)
(72) Inventor: COLLI, Maurizio, 23019 TRAONA SO (IT)
(74) Representative: Modiano, Micaela Nadia

(56) References cited:
- EP-A1- 2 518 029
- EP-A1- 2 537 784
- DE-U1- 20 220 733

## Description

The present invention relates to a method for processing and storing plates, in particular glass plates, and an apparatus for providing such method.

The present invention is useful and practical particularly in the field of automatic warehouse apparatuses which involve loading with an automatic gantry crane, handling and sizing the glass plates, in order to fulfill the need to store one or more portions of plate that remained unused in a previous cycle of sizing thereof, and to make them readily available if they need to be reused in a later sizing process.

As is known, apparatuses for cutting and storing glass plates usually comprise one or more cutting lines which comprise one or more processing surfaces, upon which the plates to be sized are made to slide, and a plurality of processing stations (which comprise cutting stations and sizing stations) arranged along such processing surfaces.

Such apparatuses also comprise a storage area, which comprises fixed stands or automatic sorters for vertically storing the plates, and a system for retrieving, handling and transferring the plates from the storage area to the cutting lines.

In more detail, the system for retrieving, handling and transferring the plates usually comprises a gantry crane which is provided at least with a handling arm and a tilting machine. In practice the handling arm of the gantry crane retrieves the plate to be sized from the storage area and, while keeping it in a vertical position, deposits it, still in a vertical position, on the tilting machine, which rotates the plate from the vertical to the horizontal and transfers it onto the processing surface of the cutting line.

As is known, tilting machines comprise a supporting surface which is configured to support the plate, and a kinematic actuation system (comprising for example hydraulic pistons and/or electric actuators) which guides the rotation of the supporting surface from the horizontal to the vertical, and vice versa, so as to rotate the plate arranged thereon.

Since the cutting or sizing of the plates generates leftover plate (hereinafter referred to as "offcut plates") to be recovered, there is a need to have an apparatus that makes it possible to store them and make them available for subsequent processing, if needed.

Nowadays a first type of apparatus for warehousing and reusing offcut plates is known which comprises a storage structure located on the floor, which, similarly to the storage area, comprises vertical supports which define vertical seats inside which the offcut plates are aligned in the vertical position by inserting them laterally, in series, one behind the other.

Such apparatuses for warehousing and reusing offcut plates have the disadvantage of occupying floor space, increasing the surface taken up by the system overall.

Furthermore, owing to the shape structure of the vertical seats and the fact that the offcut plates are aligned along vertical planes and must necessarily be extracted laterally, the offcut plates must necessarily be extracted in reverse order with respect to the order in which they were stored; this renders the method of recovery of the offcut plates for subsequent machining complex, costly and inflexible.

A second type of apparatus for warehousing and reusing offcut plates is also known, which comprises an elevated storage structure that can be positioned above the cutting line, which comprises horizontal supports that define horizontal seats, in the manner of shelves, inside which the offcut plates are aligned in the horizontal position by inserting them from the front, in series, one behind the other.

Such apparatuses also necessitate a special device for lifting the plates, which picks up the offcut plates from the processing surface, lifts them while keeping them horizontal, and inserts them into the horizontal seats.

EP2537784A1, DE20220733U1 and EP2518029A1 are examples of such handling apparatuses.

Apparatuses for warehousing and reusing offcut plates of this type have the disadvantage of being considerably complex and costly, in particular owing to the presence of the device for lifting the plates.

Furthermore, the positioning of the device for lifting the plates, which must necessarily be adjacent to the processing surface, as well as taking up a considerable amount of space, can also represent an obstacle to any translation of the tilting machine, under certain logistical circumstances, since the structure supporting the lifting device is fixed to the floor.

In addition, owing to the shape structure of the "shelf-like" seats and the fact that the offcut plates are aligned along horizontal planes and must necessarily be extracted frontally, the offcut plates must necessarily be extracted in reverse order with respect to the order in which they were stored; in this case too, therefore, the method of recovery of the offcut plates for subsequent machining is complex, costly and inflexible.

The aim of the present invention consists in devising a method for processing and storing plates and an apparatus for providing such method, which solve the above mentioned technical problems, eliminates the drawbacks and overcomes the limitations of the known art, by making it possible to occupy less space.

Within this aim, an object of the present invention is to provide a method for processing and storing plates and an apparatus for providing such method that are easy to implement and economically competitive when compared to the known art.

Another object of the invention consists of providing a method for processing and storing plates and an apparatus for providing such method that make it possible to retrieve the offcut plates in an order independent of the order with which they were stored.

Another object of the invention consists in providing a method for processing and storing plates and an apparatus for providing such method that make it possible to store both plates and portions of plates.

This aim and these and other objects which will become better apparent hereinafter are all achieved by a method according to claim 1.

This aim and these and other objects which will become better apparent hereinafter are also achieved by an apparatus according to claim 5.

Further characteristics and advantages of the invention will become better apparent from the description of two preferred, but not exclusive, embodiments of a method for processing and storing plates and an apparatus for providing such method, which are illustrated by way of non-limiting example with the aid of the accompanying drawings wherein:
Figure 1 is a side view of a possible embodiment of an apparatus for processing and storing plates according to the invention;
Figure 2 is a side view of part of the apparatus in Figure 1;
Figures 3-12 show of part of the apparatus in Figure 1 during the subsequent steps of the method, according to the invention, in which:

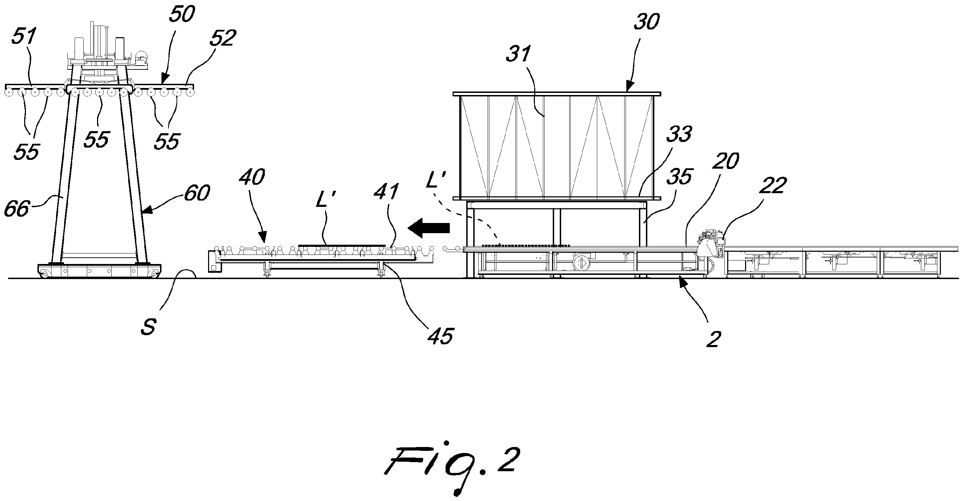

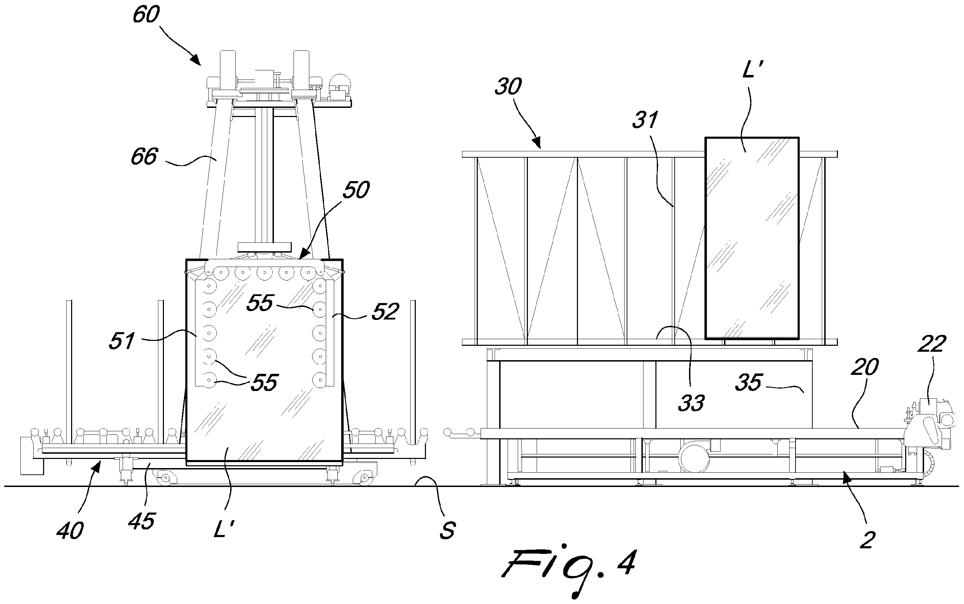

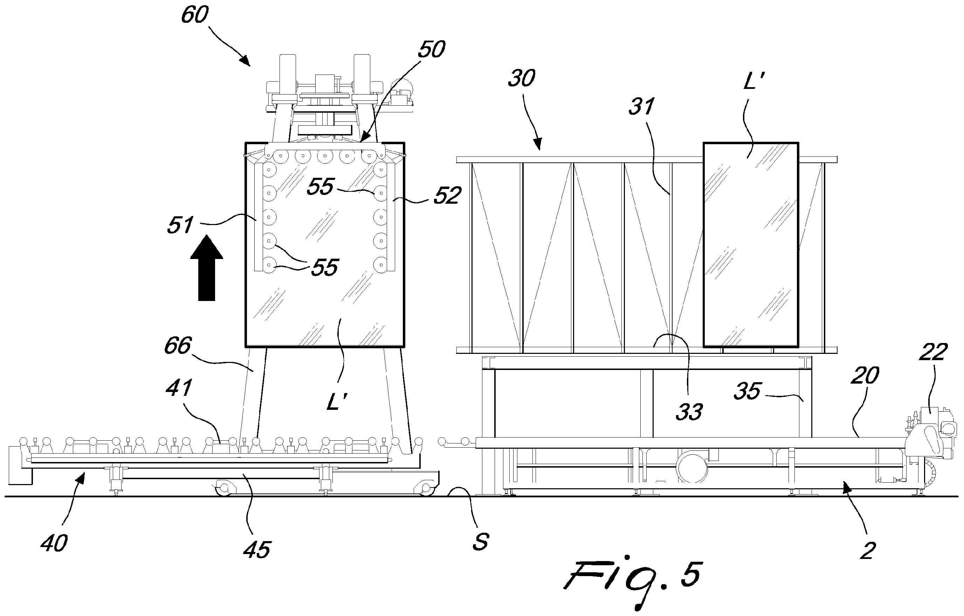

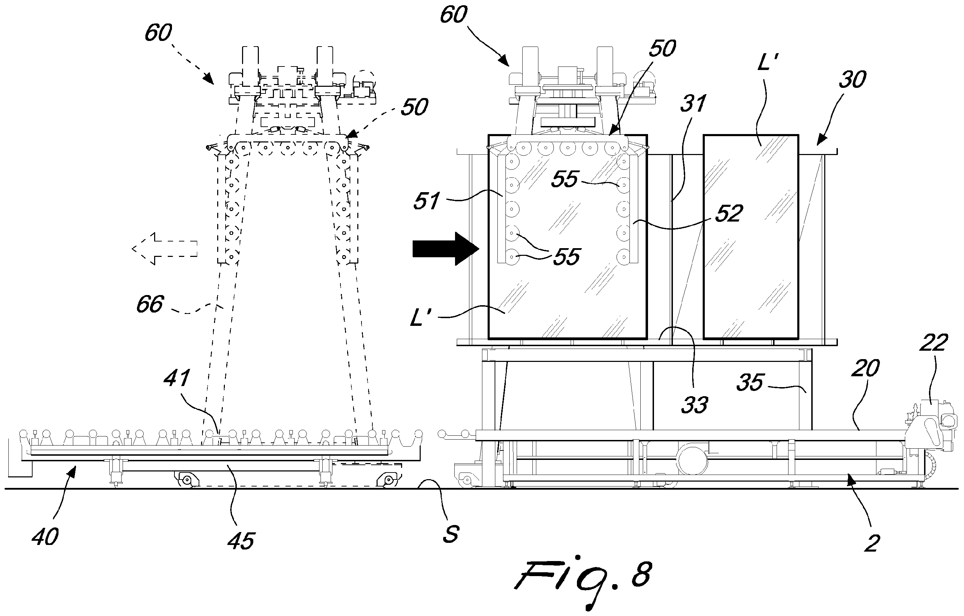

Figures 2, 4, 5, 8 and 12 are side views,

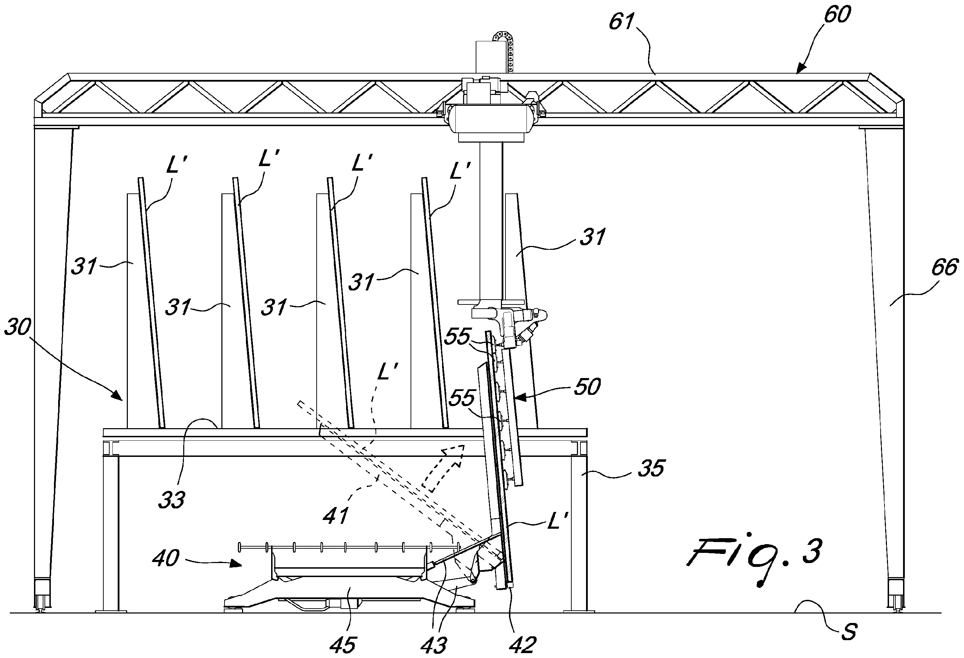

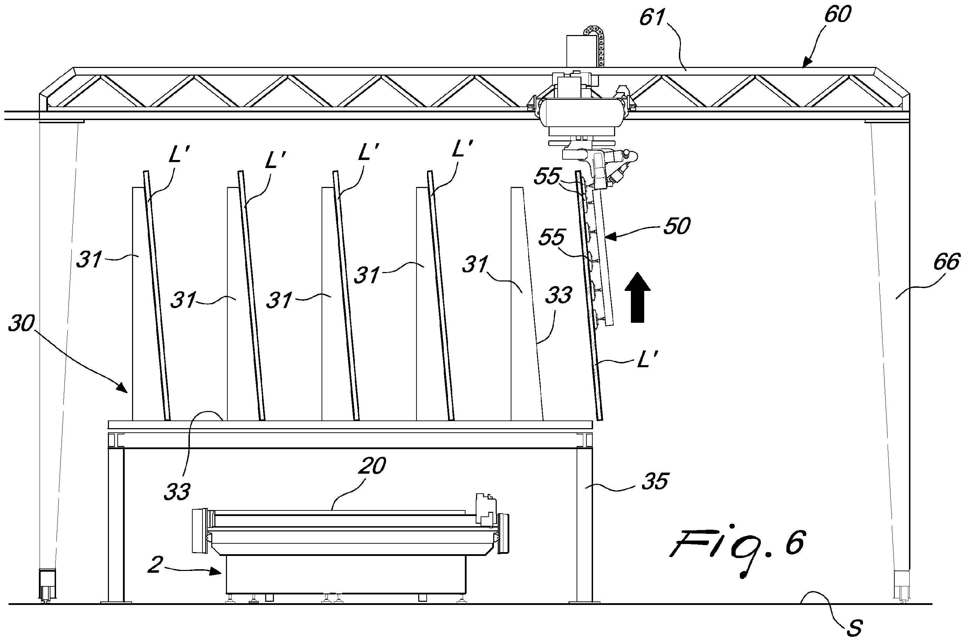

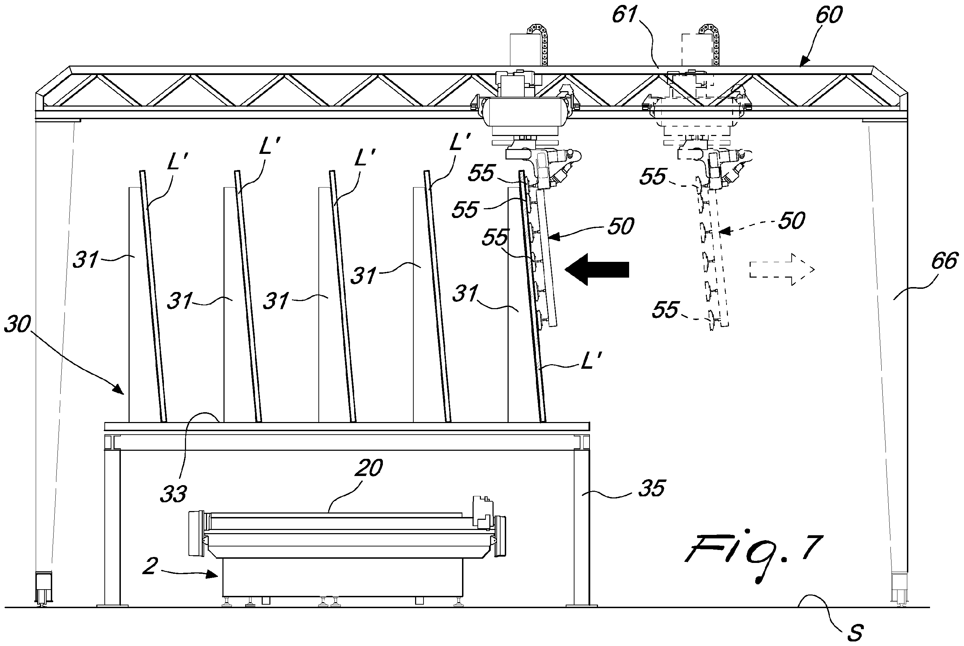

Figures 3, 6, 7 and 11 are front elevation views,

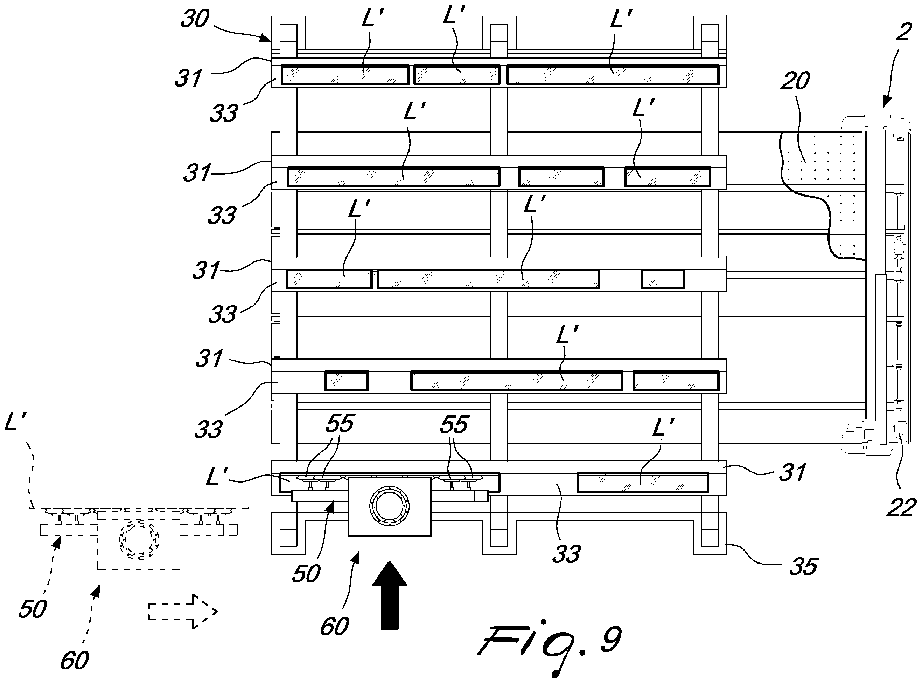

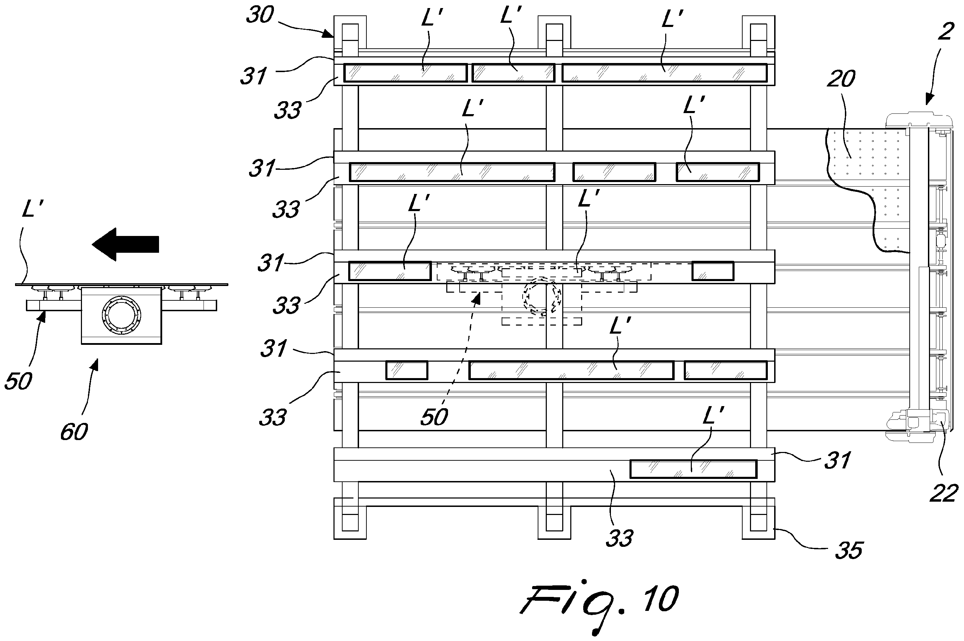

Figures 9 and 10 are plan views from above;

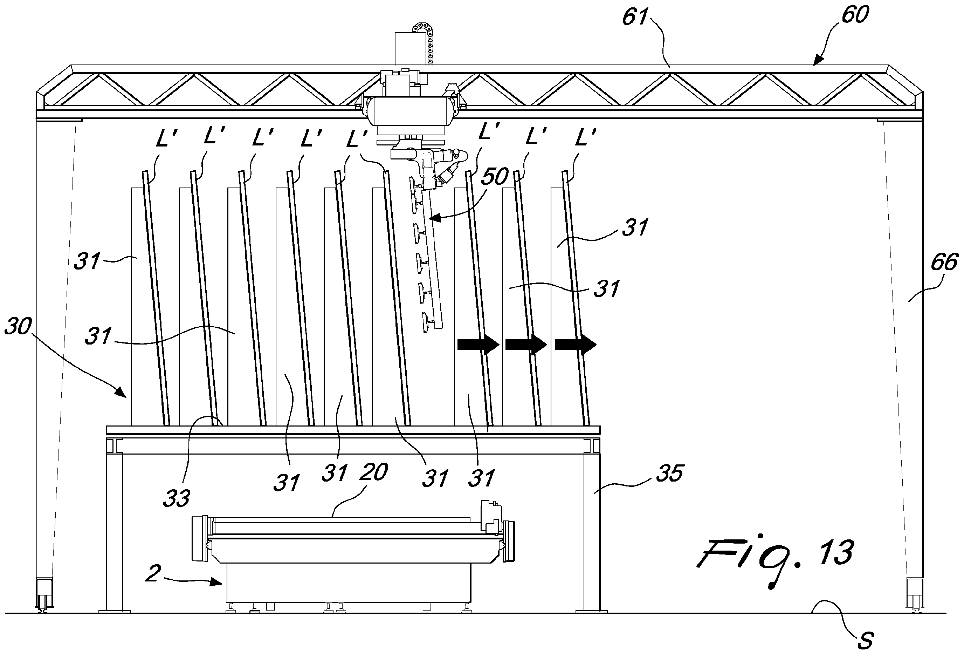

Figure 13 is a side view of part of an embodiment of the apparatus according to the invention.

With reference to the figures, the apparatus, generally designated by the reference numeral 1, comprises at least one processing line 2 for processing plates L, L' and preferably for cutting and sizing plates L made of glass.

In greater detail, the processing line 2 comprises at least one horizontal processing surface 20 and is configured, in a known manner, so that on such processing surface 20, in a processing step, at least one plate to be processed L is handled and cut, producing at least one offcut plate L'.

Preferably, the cutting line 2 comprises one or more processing stations 22, such as for example a cutting station and/or a sizing station, arranged along the processing surface 20.

In general, the processing line 2 and the corresponding levels of machining 20 and processing stations 22 are conventional and can be chosen among those already in use in conventional sizing plants for plates and therefore they are not described in detail here.

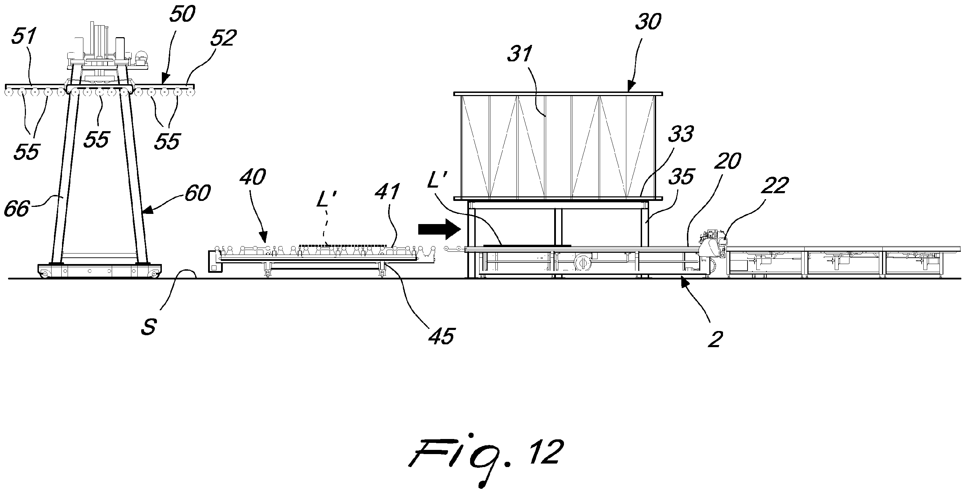

The apparatus 1 further comprises a tilting machine 40 which can be arranged adjacent to the processing surface 20 in order to receive at least one offcut plate L' from the processing surface 20 (as illustrated for example in Figure 2) and/or to feed such processing surface 20 with at least one offcut plate L' (as illustrated for example in Figure 12).

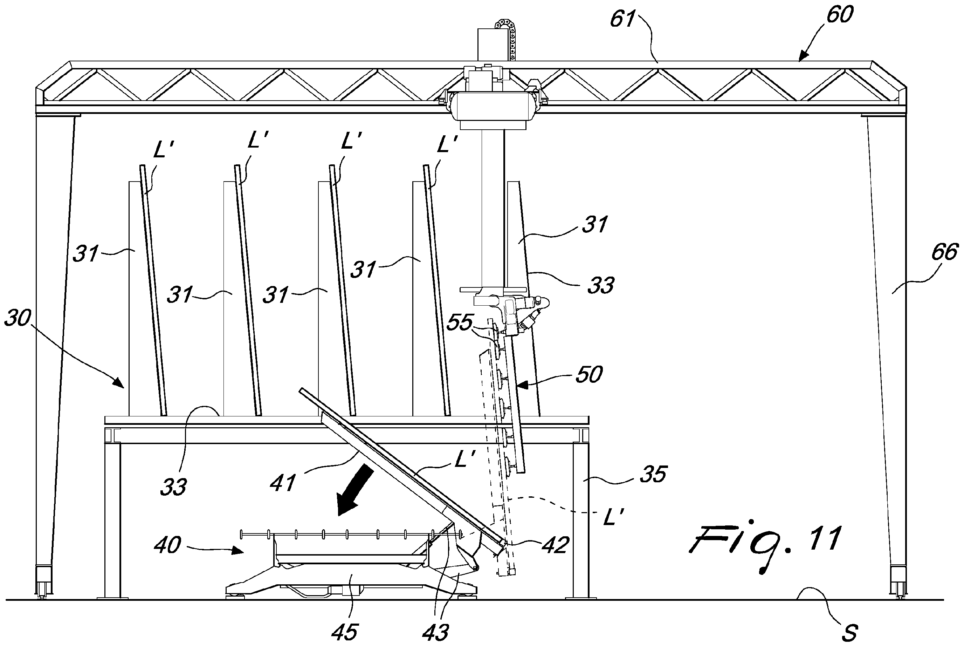

The tilting machine 40 is configured, in a known manner, to tilt the at least one offcut plate L' from a substantially horizontal position to a substantially vertical position (as illustrated for example in Figure 3) and vice versa (as illustrated for example in Figure 11).

It should be noted that, in the present description and in the accompanying claims, the expression "substantially horizontal" is used to mean arranged along an ideal horizontal plane (i.e. parallel to the ground S and perpendicular to the force of gravity).

Similarly, in the present description and in the accompanying claims, the expression "substantially vertical" is used to mean arranged along an ideal vertical plane (i.e. parallel to the force of gravity and perpendicular to the ground S) or inclined with respect to the ideal vertical plane at a small angle (equal to or close to 5°).

The term "tilting machine 40" therefore means, in general, any machine that is configured to support and tilt a plate L, L' from a substantially horizontal position to a substantially vertical position and vice versa, such as for example one of the conventional tilting machines that are commonly used in systems for processing and moving glass plates.

In more detail, the tilting machine 40 comprises preferably a supporting surface 41 which is adapted to support and keep in position a plate L, L' and is provided with locking elements 42 that are configured to hold a plate L, L' placed on the supporting surface 41 (such as for example rollers with horizontal rotation axes with motorized rubber wheels).

The supporting surface 41 is coupled to a base body 45, by way of one or more kinetic mechanisms 43, so as to be horizontally pivoted with respect to the base body or in any case so as to be rotatable about a horizontal axis, at least between a substantially horizontal position and a substantially vertical position. Conveniently, the tilting machine 40 comprises one or more actuators which guide the rotation of the supporting surface 41.

Optionally, the base body 45 is provided with displacement means, such as for example legs fitted with wheels, in order to move along the ground S, preferably along a transverse direction and/or a parallel direction with respect to the processing line.

The apparatus 1 also comprises a handling arm 50, which is configured to engage the offcut plate L' in a substantially vertical position and to move it while keeping it in a substantially vertical position.

The term "handling arm 50" means, in general, any arm that is configured to fasten onto and support a plate L, L' and to move it while keeping it in a substantially vertical position, such as for example one of the conventional mechanical arms that are commonly used in systems for processing and moving glass plates and preferably a handling arm 50 of the type provided with suckers 55 which are configured to adhere removably to a glass plate.

In the preferred embodiments, the handling arm 50 comprises at least two lateral arms 51, 52 which can be oriented along a vertical plane and which are provided with suckers 55 that are configured to adhere removably to a plate L', L.

In the preferred embodiments, the apparatus 1 comprises a gantry crane 60 to which the handling arm 50 is functionally connected in a known manner.

The gantry crane 60 can be constituted, for example, by a conventional gantry crane of the type commonly used in apparatuses for processing and handling glass plates, and preferably comprises a load-bearing structure 66 which is self-propelled along a horizontal direction, in more detail along horizontal guides or rails fixed to the ground S (or fixed aerially to pillars in order to avoid taking up any space on the ground). Such load-bearing structure 66 comprises, in the upper part, a horizontal load-bearing beam 61 which is arranged transversely with respect to the direction of motion of the load-bearing structure 66, and the handling arm 50 is slideably coupled to the load-bearing beam 61 and is driven by a motor-transmission system (or other conventional handling system) in order to slide longitudinally along the load-bearing beam 61.

As is evident from the figures, the load-bearing structure 66 of the gantry crane 60 can be moved at least between a first position, in which the load-bearing beam 61 (and therefore the handling arm 50 with it) is positioned above the processing surface 20 and the storage structure 30 that will be described below, and a second position, in which the load-bearing beam 61 (and therefore the handling arm 50 with it) is positioned above the tilting machine 40 (when this is positioned adjacent to the processing surface 20), so that the handling arm 50 can move the offcut plates L' from the tilting machine 40 to the storage structure 30 and vice versa, as will become clearer below.

In this manner, the gantry crane 60 is configured to drive the handling arm 50 at least between the tilting machine 40 and the storage structure 30 that will be described below.

According to the invention, the apparatus 1 comprises a storage structure 30 for storing the at least one offcut plate L'. In general, the storage structure 30 is configured to store a plurality of plates L and/or of offcut plates L'.

Such storage structure 30 is arranged above the processing surface 20 and comprises a plurality of vertical supports 31 for the support of the offcut plates L' in a substantially vertical position.

The vertical supports 31 can comprise vertical and/or crosswise support stands and/or posts and/or frames and preferably also fixing means which are adapted to keep the offcut plates L' in position; in the examples shown, the vertical supports comprise a resting surface, on which the offcut plates L' are placed, which is inclined with respect to the ideal vertical plane by a few degrees (preferably about 5°) so as to prevent the accidental tipping of the offcut plates L'.

The handling arm 50 is therefore configured to move at least one offcut plate L' from the tilting machine 40 to the storage structure 30 and vice versa, for example by way of the gantry crane 60 as previously described.

Turning now in more detail to the storage structure 30, in the preferred embodiments this comprises a horizontal resting surface 33, arranged above the processing surface 20 (or at least above one of the processing surfaces, when there is more than one) and parallel thereto, and the vertical supports 31 are installed on the resting surface 33.

The resting surface 33 is supported by a supporting structure 35 which is fixed and/or resting on the ground and/or on the underlying processing line 2, for example by way of supporting legs which are comprised in the supporting structure 35.

The resting surface 33 is conveniently spaced apart from the underlying processing line 2 so as not to impede the processing of the plates L, L' on the processing surface 20.

In the preferred embodiments, the vertical supports 31 are arranged along substantially vertical planes which are mutually parallel. Along each vertical plane, a single vertical support 31 can be installed which extends longitudinally along all or most of the length of the resting surface 33 or, alternatively, a row of vertical supports 31 can be installed which are aligned along that vertical plane.

In general the vertical supports 31 (or the rows of vertical supports 31) are installed on the resting surface 33 so that the handling arm 50 can pass between two vertical supports 31 (or between two rows of vertical supports 33) that are frontally adjacent, in order to deposit or retrieve an offcut plate L'. In practice, the vertical supports 31 (or the rows of vertical supports 31) are spaced apart so that, in the step of recovery of an offcut plate L', the handling arm 50 can retrieve an offcut plate L' which is arranged behind another offcut plate L' with respect to an exit edge of the storage structure 30 (i.e. the end where the handling arm 50 passes in order to enter the storage structure 30) so that the offcut plates L' can be retrieved in an order that is independent of the order in which they have been stored, for example retrieving an offcut plate L' which is arranged behind another offcut plate L' as shown in Figure 10.

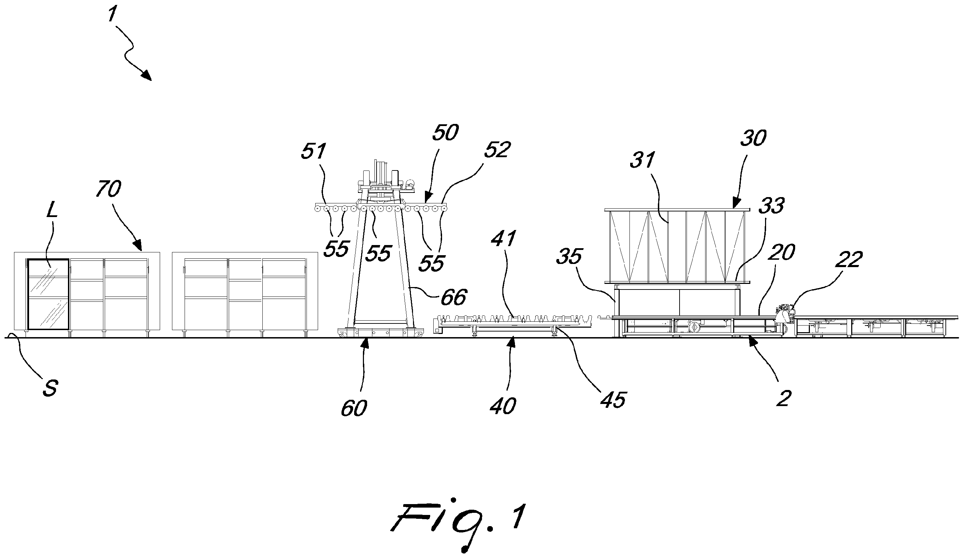

In some embodiments, like the one illustrated in Figures 1 to 12, the vertical supports 31 (or the rows of vertical supports 31) are fixed, on the resting surface 33, along substantially vertical planes that are mutually parallel and are all mutually spaced apart so as to allow the passage of the handling arm 50, as shown in Figures 9 and 10.

In an advanced embodiment, shown in Figure 13, the vertical supports 31 (or the rows of vertical supports 31) are arranged along substantially vertical and mutually parallel planes and can move along a direction that is transverse to the planes, so that they can be moved mutually closer together in order to reduce the space occupation in a compact storage condition and selectively spaced apart (i.e. made to slide so as to separate a chosen pair of adjacent vertical supports 31 or of adjacent rows of vertical supports 31), in the storage step and in the step of recovery (i.e. when the deposit or retrieval of an offcut plate L' occurs), in order to allow the passage of the handling arm 50 between two adjacent vertical supports 31 (or rows of vertical supports 31) and the movement of at least one offcut plate L' between the two adjacent vertical supports 31 (or rows of vertical supports 31). In this advanced embodiment, in practice, the vertical supports 31 (or the rows of vertical supports 31) can slide along the resting surface 33, for example along horizontal guides fixed to the resting surface 33, to move mutually closer together and further apart.

In this manner, as is evident from Figure 13, for the same area of resting surface 33 there is a higher number of vertical supports 31 (or of rows of vertical supports 31) and therefore, for the same space occupied, it is possible to store a higher number of offcut plates L'.

Preferably, the apparatus 1 also comprises a storage area 70, which comprises for example, in a known manner, fixed stands or automatic sorters for storing the plates to be processed L, and the same handling arm 50 described previously is also configured to retrieve, handle and transfer the plates to be processed L from the storage area 70 to the tilting machine and/or the cutting line 2.

In the example shown in Figure 1, the storage area 70 is positioned away from the cutting line 2, and the load-bearing structure 66 of the gantry crane 60 can be moved also to at least a third position, in which the load-bearing beam 61 (and therefore the handling arm 50 with it) is arranged above the storage area 70, so that the handling arm 50 can also move the plates to be processed L from the storage area 70 to the tilting machine 40, as well as from the tilting machine 40 to the storage structure 30 and vice versa.

Note that in this manner, a single handling arm 50 and a single gantry crane 60 perform all the functions of handling both the plates to be processed L and the offcut plates L'.

In some embodiments, the apparatus 1 comprises an electronic control system which is configured to control at least the handling arm 50 and the tilting machine 40 in order to provide in an automated manner the steps of storage and of recovery of the offcut plates L' and preferably also the handling of the plates to be processed L.

According to an optional and advantageous characteristic, the electronic control system is configured to store, within a memory unit, the position, within the storage structure 30, in which each offcut plate L' is deposited, so as to be able to automatically recover each offcut plate L' when it is needed.

Operation of the apparatus is clear and evident from the foregoing description.

In any case, for the sake of completeness, below is a summary of the method that is the subject matter of the invention, for processing and storing plates L, L', which can be carried out in the apparatus 1 just described.

The method comprises:
- a processing step, in which at least one plate to be processed L is cut on the horizontal processing surface 20 of the cutting line 2,
- a storage step (shown in Figures 2-9), in which at least one offcut plate L', which is the result of the cutting of the plate to be processed L, is stored in a storage structure 30,
- a step of recovery of the offcut plate L' (shown in Figures 10-12) in which a previously stored offcut plate L' is taken from the storage structure 30 and repositioned on the processing surface 20 in order to be further processed.

Such steps are carried out in any order, according to the processing requirements, and can optionally be repeated any number of times.

According to the invention, the storage step comprises a first step of transferring at least one offcut plate L' from the processing surface 20 to the tilting machine 40 while keeping the offcut plate L' in a substantially horizontal position, for example by sliding the offcut plate L' from the processing surface 20 onto the supporting surface 41 of the tilting machine 40 which is arranged adjacent and is substantially coplanar with the processing surface 20.

The offcut plate L' is then tilted, by way of the tilting machine 40, to a substantially vertical position.

Subsequently, the offcut plate L' is moved from the tilting machine 40, bringing it above the processing surface 20 and keeping it in a substantially vertical position, by way of the handling arm 50.

The method then entails depositing the offcut plate L' in the storage structure 30, which is positioned above the processing surface 20, in a substantially vertical position, for example by resting it against a vertical support 31 in the manner described previously.

Also according to the invention, the recovery step of the offcut plate L' comprises a first step of taking from the storage structure 30, by way of the handling arm 50, at least one previously stored offcut plate L' and, while keeping it in a substantially vertical position, depositing it on the tilting machine 40 in a substantially vertical position.

The offcut plate L' is then tilted, by way of the tilting machine 40, to a substantially horizontal position.

Also in the recovery step of the offcut plate L', the method then entails transferring the offcut plate L' from the tilting machine 40 to the processing surface 20, while keeping the offcut plate L' in a substantially horizontal position, for example by positioning the supporting surface 41 of the tilting machine 40 adjacent and substantially coplanar with the processing surface 20 and by sliding the offcut plate L' from the supporting surface 41 of the tilting machine 40 onto the processing surface 20.

In an implementation of the method in one of the preferred embodiments of the apparatus 1, as previously described, in the storage step the offcut plates L' are arranged along substantially vertical planes, which are mutually parallel and are spaced apart so that, in the step of recovery, the handling arm 50 can retrieve any offcut plate L', even when it is arranged behind another offcut plate L' with respect to an exit edge of the storage structure 30, so that the offcut plates L' can be retrieved in an order that is independent of the order in which they have been stored.

Optionally, with reference to the embodiment in Figure 13, in the storage step the offcut plates L' are arranged along substantially vertical and mutually parallel planes, which are moved mutually closer together in order to reduce the space occupation in a compact storage condition and are selectively spaced apart, in the storage step and in the step of recovery of the offcut plate L', in order to allow the passage of the handling arm 50 and the movement of at least one offcut plate L' by way of such handling arm 50.

Preferably, in the storage step, the position inside the storage structure 30 where the offcut plate L' is deposited, is stored in the electronic control system in order to be able to automatically recover it later when necessary.

In practice it has been found that the method for processing and storing plates and the apparatus for providing such method, according to the present invention, achieve the intended aim and objects in that they make it possible to take up less space with respect to the known art.

Another advantage of the apparatus and of the method, according to the invention, consists in that they are easy to implement and economically competitive when compared to the known art.

Another advantage of the apparatus and of the method, according to the invention, consists in that they make it possible to retrieve the offcut plates in an order independent of the order with which they were stored.

Another advantage of the apparatus and of the method, according to the invention, consists in that they make it possible to warehouse both plates and portions of plates.

The method for processing and storing plates and the apparatus for providing such method, thus conceived, are susceptible of numerous modifications and variations, all of which are within the scope of the appended claims.

Moreover, all the details may be substituted by other, technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. A method for processing and storing plates (L, L'), particularly glass plates, which comprises:
- a processing step, in which at least one plate to be processed (L) is cut on a horizontal processing surface (20) of a cutting line (2),
- a storage step, in which at least one offcut plate (L'), which is the result of the cutting of said plate to be processed (L), is stored in a storage structure (30),
- a step of recovery of the offcut plate (L') in which an offcut plate (L') is taken from the storage structure (30) and repositioned on said processing surface (20) in order to be further processed,
**characterized in that** said storage step comprises the substeps of:
s1. transferring said at least one offcut plate (L') from said processing surface (20) onto a tilting machine (40), while keeping said offcut plate (L') in a substantially horizontal position,
s2. tilting said offcut plate (L'), by way of said tilting machine (40), to a substantially vertical position,
s3. moving said offcut plate (L') from said tilting machine (40), bringing it above said processing surface (20) and keeping it in a substantially vertical position, by way of a handling arm (50),
s4. depositing said offcut plate (L') in a storage structure (30), arranged above said processing surface (20), in a substantially vertical position;
and **in that** said step of recovery the offcut plate (L') comprises the substeps of:
r1. taking from said storage structure (30), by way of said handling arm (50), at least one previously stored offcut plate (L') and, while keeping it in a substantially vertical position, depositing it on said tilting machine (40) in a substantially vertical position,
r2. tilting said offcut plate (L'), by way of said tilting machine (40), to a substantially horizontal position,
r3. transferring said offcut plate (L') from said tilting machine onto said processing surface (20), while keeping said offcut plate (L') in a substantially horizontal position.

2. The method according to claim 1, **characterized in that** in said storage step, in substep s4, said offcut plates (L') are arranged along substantially vertical planes, which are mutually parallel and are spaced apart so that, in said step of recovery, said handling arm (50) can retrieve an offcut plate (L') which is arranged behind another offcut plate (L') with respect to an exit edge of said storage structure (30) so that said offcut plates (L') can be retrieved in an order that is independent of the order in which they have been stored.

3. The method according to claim 1 or 2, **characterized in that** in said storage step, in substep s4, said offcut plates (L') are arranged along substantially vertical and mutually parallel planes, which are moved mutually closer together in order to reduce the space occupation in a compact storage condition and are selectively spaced apart, in said storage step and in said step of recovery, in order to allow the passage of said handling arm (50) and the movement of at least one offcut plate (L') by way of said handling arm (50).

4. The method according to one or more of the preceding claims, **characterized in that** during said storage step the position within said storage structure (30) in which said offcut plate (L') is deposited is stored in an electronic control system.

5. An apparatus (1) for providing a method according to one or more of the preceding claims, which comprises:
- at least one processing line (2) for the processing of plates (L, L'), which comprises at least one horizontal processing surface (20) and is configured so that on said processing surface, in said processing step, at least one plate to be processed (L) is moved and cut, producing at least one offcut plate (L'),
- a tilting machine (40), which can be arranged adjacent to said processing surface (20) in order to receive at least one offcut plate (L') from said processing surface (20) and/or in order to feed said processing surface (20) with at least one offcut plate (L') and which is configured to tilt said at least one offcut plate (L') from a substantially horizontal position to a substantially vertical position and vice versa,
- a handling arm (50), which is configured to engage said offcut plate (L') in a substantially vertical position and to move it while keeping it in a substantially vertical position,
**characterized in that** it comprises a storage structure (30) for the storage of said at least one offcut plate (L'), which is arranged above said processing surface (20) and which comprises a plurality of vertical supports (31) for the support of said at least one offcut plate (L') in a substantially vertical position;
said handling arm (50) being configured to move said at least one offcut plate (L') from said tilting machine (40) to said storage structure (30) and vice versa.

6. The apparatus (1) according to claim 5, **characterized in that** said vertical supports (31) are arranged along substantially vertical planes, which are mutually parallel and are spaced apart so that, in said step of recovery, said handling arm (50) can retrieve an offcut plate (L') which is arranged behind another offcut plate (L') with respect to an exit edge of said storage structure (30) so that said offcut plates (L') can be retrieved in an order that is independent of the order in which they have been stored.

7. The apparatus (1) according to claim 5 or 6, **characterized in that** said vertical supports (31) are arranged along substantially vertical and mutually parallel planes and can move along a direction that is transverse to said planes, so that they can be moved mutually closer together in order to reduce the space occupation in a compact storage condition and selectively spaced apart, in said storage step and in said step of recovery of the offcut plate (L'), in order to allow the passage of said handling arm (50) between two adjacent vertical supports (31) and the movement of at least one offcut plate (L') between said two adjacent vertical supports (31).

8. The apparatus (1) according to one or more of claims 5 to 7, **characterized in that** said storage structure (30) comprises a horizontal resting surface (33), which is arranged above said processing surface (20) and is parallel thereto and on which said vertical supports (31) are installed.

9. The apparatus (1) according to one or more of claims 5 to 8, **characterized in that** it comprises a gantry crane (60) which comprises a load-bearing structure (66) which is self-propelled along a horizontal direction which comprises, in the upper part, a horizontal load-bearing beam (61) which is arranged transversely with respect to the movement direction of the load-bearing structure (66), said handling arm (50) being slideably coupled to said load-bearing beam (61); said load-bearing structure (66) of the gantry crane (60) being movable at least between a first position, in which the load-bearing beam (61) is arranged above the processing surface (20) and the storage structure (30), and a second position, in which the load-bearing beam (61) is arranged above the tilting machine (40) when said machine is arranged adjacent to the processing surface (20).

10. The apparatus (1) according to one or more of claims 5 to 9, **characterized in that** it comprises an electronic control system which is configured to control at least said handling arm (50) and said tilting machine (40) in order to provide, in an automated manner, at least said steps of storage and recovery;
said electronic control system being configured to store, within a memory unit, the position in which each offcut plate (L') is deposited.

## Patentansprüche

1. Verfahren zum Bearbeiten und Lagern von Platten (L, L'), insbesondere Glasplatten, das Folgendes aufweist:
- einen Bearbeitungsschritt, in dem mindestens eine zu bearbeitende Platte (L) auf einer horizontalen Bearbeitungsfläche (20) einer Schneidlinie (2) geschnitten wird,
- einen Lagerschritt, in dem mindestens eine Restplatte (L'), welche das Ergebnis des Schneidens der zu bearbeitenden Platte (L) ist, in einer Lagerstruktur (30) gelagert wird,
- einen Schritt der Rückgewinnung der Restplatte (L'), in dem eine Restplatte (L') aus der Lagerstruktur (30) entnommen und zur weiteren Bearbeitung auf der Bearbeitungsfläche (20) neu positioniert wird,
**dadurch gekennzeichnet, dass** der Lagerschritt folgende Teilschritte aufweist:
s1. Übertragen der mindestens einen Restplatte (L') von der Bearbeitungsfläche (20) auf eine Kippmaschine (40), während die Restplatte (L') in einer im Wesentlichen horizontalen Position gehalten wird,
s2. Kippen der Restplatte (L') mittels der Kippmaschine (40) in eine im Wesentlichen vertikale Position,
s3. Bewegen der Restplatte (L') von der Kippmaschine (40), Bringen derselben über die Bearbeitungsfläche (20) und Halten derselben in einer im Wesentlichen vertikalen Position mittels eines Handhabungsarms (50),
s4. Abstellen der Restplatte (L') in einer über der Bearbeitungsfläche (20) angeordneten Lagerstruktur (30) in einer im Wesentlichen vertikalen Position;
und dadurch, dass der Schritt der Rückgewinnung der Restplatte (L') folgende Teilschritte aufweist:
r1. Entnehmen mindestens einer zuvor gelagerten Restplatte (L') mittels des Handhabungsarms (50) aus der Lagerstruktur (30) und, während sie in einer im Wesentlichen vertikalen Position gehalten wird, Abstellen derselben auf der Kippmaschine (40) in einer im Wesentlichen vertikalen Position,
r2. Kippen der Restplatte (L') mittels der Kippmaschine (40) in eine im Wesentlichen horizontale Position,
r3. Übertragen der Restplatte (L') von der Kippmaschine auf die Bearbeitungsfläche (20), während die Restplatte (L') in einer im Wesentlichen horizontalen Position gehalten wird.

2. Verfahren nach Anspruch 1, **dadurch gekennzeichnet, dass** in dem Lagerschritt, in Teilschritt s4, die Restplatten (L') entlang im Wesentlichen vertikaler Ebenen angeordnet sind, die zueinander parallel und so voneinander beabstandet sind, dass der Handhabungsarm (50) in dem Schritt der Rückgewinnung eine Restplatte (L') herausholen kann, die in Bezug auf eine Austrittskante der Lagerstruktur (30) so hinter einer anderen Restplatte (L') angeordnet ist, dass die Restplatten (L') in einer Reihenfolge herausgeholt werden können, die unabhängig von der Reihenfolge ist, in der sie gelagert wurden.

3. Verfahren nach Anspruch 1 oder 2, **dadurch gekennzeichnet, dass** in dem Lagerschritt, in Teilschritt s4, die Restplatten (L') entlang im Wesentlichen vertikaler und zueinander paralleler Ebenen angeordnet sind, die näher zueinander hin bewegt werden, um die Raumbelegung in einem kompakten Lagerzustand zu reduzieren, und die in dem Lagerschritt und in dem Schritt der Rückgewinnung selektiv voneinander beabstandet werden, um den Durchgang des Handhabungsarms (50) und die Bewegung mindestens einer Restplatte (L') mittels des Handhabungsarms (50) zu ermöglichen.

4. Verfahren nach einem oder mehreren der vorhergehenden Ansprüche, **dadurch gekennzeichnet, dass** während des Lagerschritts die Position innerhalb der Lagerstruktur (30), auf der die Restplatte (L') abgestellt ist, in einem elektronischen Steuersystem gespeichert wird.

5. Vorrichtung (1) zum Bereitstellen eines Verfahrens nach einem oder mehreren der vorhergehenden Ansprüche, die Folgendes aufweist:
- mindestens eine Bearbeitungslinie (2) zum Bearbeiten von Platten (L, L'), die mindestens eine horizontale Bearbeitungsfläche (20) aufweist und so ausgestaltet ist, dass in dem Bearbeitungsschritt auf der Bearbeitungsfläche mindestens eine zu bearbeitende Platte (L) bewegt und geschnitten wird, wodurch mindestens eine Restplatte (L') hergestellt wird,
- eine Kippmaschine (40), die benachbart zu der Bearbeitungsfläche (20) angeordnet werden kann, um mindestens eine Restplatte (L') von der Bearbeitungsfläche (20) aufzunehmen und/oder um der Bearbeitungsfläche (20) mindestens eine Restplatte (L') zuzuführen, und die so ausgestaltet ist, dass die mindestens eine Restplatte (L') von einer im Wesentlichen horizontalen Position in eine im Wesentlichen vertikale Position und umgekehrt gekippt wird,
- einen Handhabungsarm (50), der so ausgestaltet ist, dass er mit der Restplatte (L') in einer im Wesentlichen vertikalen Position in Eingriff tritt und sie bewegt, während er sie in einer im Wesentlichen vertikalen Position hält,
**dadurch gekennzeichnet, dass** sie eine Lagerstruktur (30) zur Lagerung der mindestens einen Restplatte (L') aufweist, die über der Bearbeitungsfläche (20) angeordnet ist und die mehrere vertikale Gestelle (31) zum Stützen der mindestens einen Restplatte (L') in einer im Wesentlichen vertikalen Position aufweist;
wobei der Handhabungsarm (50) so ausgestaltet ist, dass er die mindestens eine Restplatte (L') von der Kippmaschine (40) zu der Lagerstruktur (30) und umgekehrt bewegt.

6. Vorrichtung (1) nach Anspruch 5, **dadurch gekennzeichnet, dass** vertikale Gestelle (31) entlang im Wesentlichen vertikaler Ebenen angeordnet sind, die zueinander parallel und so voneinander beabstandet sind, dass der Handhabungsarm (50) in dem Schritt der Rückgewinnung eine Restplatte (L') herausholen kann, die in Bezug auf eine Austrittskante der Lagerstruktur (30) so hinter einer anderen Restplatte (L') angeordnet ist, dass die Restplatten (L') in einer Reihenfolge herausgeholt werden können, die unabhängig von der Reihenfolge ist, in der sie gelagert wurden.

7. Vorrichtung (1) nach Anspruch 5 oder 6, **dadurch gekennzeichnet, dass** die vertikalen Gestelle (31) entlang im Wesentlichen vertikaler und zueinander paralleler Ebenen angeordnet sind und sich so entlang einer Richtung bewegen können, die quer zu den Ebenen ist, dass sie bei einem kompakten Lagerzustand näher zueinander hin bewegt werden können, um die Raumbelegung zu reduzieren und in dem Lagerschritt und in dem Schritt der Rückgewinnung der Restplatte (L') selektiv beabstandet werden können, um den Durchgang des Handhabungsarms (50) zwischen zwei benachbarten vertikalen Gestellen (31) und die Bewegung mindestens einer Restplatte (L') zwischen den zwei benachbarten vertikalen Gestellen (31) zu ermöglichen.

8. Vorrichtung (1) nach einem oder mehreren der Ansprüche 5 bis 7, **dadurch gekennzeichnet, dass** die Lagerstruktur (30) eine horizontale Auflagefläche (33) aufweist, die über der Bearbeitungsfläche (20) angeordnet und parallel zu dieser ist und auf welcher die vertikalen Gestelle (31) installiert sind.

9. Vorrichtung (1) nach einem oder mehreren der Ansprüche 5 bis 8, **dadurch gekennzeichnet, dass** sie einen Portalkran (60) aufweist, der eine tragende Struktur (66) aufweist, die entlang einer horizontalen Richtung selbstfahrend ist, die im oberen Teil einen horizontalen tragenden Träger (61) aufweist, der quer in Bezug auf die Bewegungsrichtung der tragenden Struktur (66) angeordnet ist, wobei der Handhabungsarm (50) verschiebbar mit dem tragenden Träger (61) gekoppelt ist; wobei die tragende Struktur (66) des Portalkrans (60) mindestens zwischen einer ersten Position, in welcher der tragende Träger (61) über der Bearbeitungsfläche (20) und der Lagerstruktur (30) angeordnet ist, und einer zweiten Position, in welcher der tragende Träger (61) über der Kippmaschine (40) angeordnet ist, wenn die Maschine benachbart zu der Bearbeitungsfläche (20) angeordnet ist, bewegbar ist.

10. Vorrichtung (1) nach einem oder mehreren der Ansprüche 5 bis 9, **dadurch gekennzeichnet, dass** sie ein elektronisches Steuersystem aufweist, das konfiguriert ist, um mindestens den Handhabungsarm (50) und die Kippmaschine (40) zu steuern, um auf automatisierte Weise mindestens die Schritte der Lagerung und Rückgewinnung bereitzustellen;
wobei das elektronische Steuersystem dazu konfiguriert ist, in einer Speichereinheit die Position zu speichern, auf der jede Restplatte (L') abgestellt ist.

## Revendications

1. Procédé pour traiter et stocker des plaques (L, L'), en particulier des plaques de verre, qui comporte :
- une étape de traitement, dans laquelle au moins une plaque à traiter (L) est coupée sur une surface de traitement horizontale (20) d'une ligne de coupe (2),
- une étape de stockage, dans laquelle au moins une plaque de chute (L'), qui est le résultat de la découpe de ladite plaque à traiter (L), est stockée dans une structure de stockage (30),
- une étape de récupération de la plaque de chute (L') dans laquelle une plaque de chute (L') est extraite de la structure de stockage (30) et repositionnée sur ladite surface de traitement (20) afin d'être traitée ultérieurement,
**caractérisé en ce que** ladite étape de stockage comporte les sous-étapes consistant à :
s1. transférer ladite au moins une plaque de chute (L') à partir de ladite surface de traitement (20) sur une machine de basculement (40), tout en maintenant ladite plaque de chute (L') dans une position sensiblement horizontale,
s2. faire basculer ladite plaque de chute (L'), au moyen de ladite machine de basculement (40), jusqu'à une position sensiblement verticale,
s3. déplacer ladite plaque de chute (L') à partir de ladite machine de basculement (40), l'amener au-dessus de ladite surface de traitement (20) et la maintenir dans une position sensiblement verticale, au moyen d'un bras manipulateur (50),
s4. déposer ladite plaque de chute (L') dans une structure de stockage (30), agencée au-dessus de ladite surface de traitement (20), dans une position sensiblement verticale,
et **en ce que** ladite étape de récupération de la plaque de chute (L') comporte les sous-étapes consistant à :
r1. extraire de ladite structure de stockage (30), au moyen dudit bras manipulateur (50), au moins une plaque de chute (L') précédemment stockée et, tout en la maintenant dans une position sensiblement verticale, la déposer sur ladite machine de basculement (40) dans une position sensiblement verticale,
r2. faire basculer ladite plaque de chute (L'), au moyen de ladite machine de basculement (40), jusqu'à une position sensiblement horizontale,
r3. transférer ladite plaque de chute (L') à partir de ladite machine de basculement sur ladite surface de traitement (20), tout en maintenant ladite plaque de chute (L') dans une position sensiblement horizontale.

2. Procédé selon la revendication 1, **caractérisé en ce qu'**à ladite étape de stockage, dans une sous-étape s4, lesdites plaques de chute (L') sont agencées le long de plans sensiblement verticaux, qui sont mutuellement parallèles et sont espacés les uns des autres de sorte que, à ladite étape de récupération, ledit bras manipulateur (50) peut récupérer une plaque de chute (L') qui est agencée derrière une autre plaque de chute (L') par rapport à un bord de sortie de ladite structure de stockage (30) de sorte que lesdites plaques de chute (L') peuvent être récupérées dans un ordre qui est indépendant de l'ordre dans lequel elles ont été stockées.

3. Procédé selon la revendication 1 ou 2, **caractérisé en ce qu'**à ladite étape de stockage, à la sous-étape s4, lesdites plaques de chute (L') sont agencées le long de plans sensiblement verticaux et mutuellement parallèles, qui sont rapprochés mutuellement ensemble afin de réduire l'occupation d'espace dans un état de stockage compact et sont sélectivement espacés les uns des autres, à ladite étape de stockage et à ladite étape de récupération, afin de permettre le passage dudit bras manipulateur (50) et le mouvement d'au moins une plaque de chute (L') au moyen dudit bras manipulateur (50).

4. Procédé selon une ou plusieurs des revendications précédentes, **caractérisé en ce que** pendant ladite étape de stockage, la position à l'intérieur de ladite structure de stockage (30) dans laquelle ladite plaque de chute (L') est déposée, est stockée dans un système de commande électronique.

5. Appareil (1) pour fournir un procédé selon une ou plusieurs des revendications précédentes, qui comporte :
- au moins une ligne de traitement (2) pour le traitement de plaques (L, L'), qui comporte au moins une surface de traitement horizontale (20) et est configurée de sorte que sur ladite surface de traitement, à ladite étape de traitement, au moins une plaque à traiter (L) est déplacée et coupée, en produisant au moins une plaque de chute (L'),
- une machine de basculement (40), qui peut être agencée adjacente à ladite surface de traitement (20) afin de recevoir au moins une plaque de chute (L') provenant de ladite surface de traitement (20) et/ou afin d'alimenter ladite surface de traitement (20) avec au moins une plaque de chute (L') et qui configurée pour faire basculer ladite au moins une plaque de chute (L') d'une position sensiblement horizontale à une position sensiblement verticale et vice versa,
- un bras manipulateur (50), qui est configuré pour venir en prise avec ladite plaque de chute (L') dans une position sensiblement verticale et la déplacer tout en la maintenant dans une position sensiblement verticale,
**caractérisé en ce qu'**il comporte une structure de stockage (30) pour le stockage de ladite au moins une plaque de chute (L'), qui est agencée au-dessus de ladite surface de traitement (20) et qui comporte une pluralité de supports verticaux (31) pour le support de ladite au moins une plaque de chute (L') dans une position sensiblement verticale,
ledit bras manipulateur (50) étant configuré pour déplacer ladite au moins une plaque de chute (L') à partir de ladite machine de basculement (40) jusqu'à ladite structure de stockage (30) et vice versa.

6. Appareil (1) selon la revendication 5, **caractérisé en ce que** lesdits supports verticaux (31) sont agencés le long de plans sensiblement verticaux, qui sont mutuellement parallèles et sont espacés les uns des autres de sorte que, à ladite étape de récupération, ledit bras manipulateur (50) peut récupérer une plaque de chute (L') qui est agencée derrière une autre plaque de chute (L') par rapport à un bord de sortie de ladite structure de stockage (30) de sorte que lesdites plaques de chute (L') peuvent être récupérées dans un ordre qui est indépendant de l'ordre dans lequel elles ont été stockées.

7. Appareil (1) selon la revendication 5 ou 6, **caractérisé en ce que** lesdits supports verticaux (31) sont agencés le long de plans sensiblement verticaux et mutuellement parallèles et peuvent se déplacer le long d'une direction qui est transversale auxdits plans, de sorte qu'ils peuvent être rapprochés mutuellement ensemble afin de réduire l'occupation d'espace dans un état de stockage compact et sélectivement espacés les uns des autres, à ladite étape de stockage et à ladite étape de récupération de la plaque de chute (L'), afin de permettre le passage dudit bras manipulateur (50) entre deux supports verticaux (31) adjacents et le mouvement d'au moins une plaque de chute (L') entre lesdits deux supports verticaux (31) adjacents.

8. Appareil (1) selon une ou plusieurs des revendications 5 à 7, **caractérisé en ce que** ladite structure de stockage (30) comporte une surface d'appui horizontale (33), qui est agencée au-dessus de ladite surface de traitement (20) et est parallèle à celle-ci et sur laquelle lesdits supports verticaux (31) sont installés.

9. Appareil (1) selon une ou plusieurs des revendications 5 à 8, **caractérisé en ce qu'**il comporte un pont portique (60) qui comporte une structure porteuse de charge (66) qui est autopropulsée le long d'une direction horizontale qui comporte, dans la partie supérieure, une poutre porteuse de charge horizontale (61) qui est agencée transversalement par rapport à la direction de mouvement de la structure porteuse de charge (66), ledit bras manipulateur (50) étant couplé de manière coulissante à ladite poutre porteuse de charge (61), ladite structure porteuse de charge (66) du pont portique (60) étant mobile au moins entre une première position, dans laquelle la poutre porteuse de charge (61) est agencée au-dessus de la surface de traitement (20) et la structure de stockage (30), et une seconde position, dans laquelle la poutre porteuse de charge (61) est agencée au-dessus de la machine de basculement (40) lorsque ladite machine est agencée adjacente à la surface de traitement (20).

10. Appareil (1) selon une ou plusieurs des revendications 5 à 9, **caractérisé en ce qu'**il comporte un système de commande électronique qui est configuré pour commander au moins ledit bras manipulateur (50) et ladite machine de basculement (40) afin de fournir, d'une manière automatisée, au moins lesdites étapes de stockage et de récupération,
ledit système de commande électronique étant configuré pour stocker, à l'intérieur d'une unité de mémoire, la position dans laquelle chaque plaque de chute (L') est déposée.
